# EUROPÄISCHE PATENTSCHRIFT

(11) **EP 1 611 202 B1**
(45) Veröffentlichungstag und Bekanntmachung des Hinweises auf die Patenterteilung: **12.10.2011**
(21) Anmeldenummer: 04721846.6
(22) Anmeldetag: 19.03.2004
(51) Int. Cl.: C08L 51/00, C08L 77/00, C08L 55/02, C08L 51/04, C08J 3/00

(54) **VERFAHREN ZUR HERSTELLUNG THERMOPLASTISCHER FORMMASSEN**
METHOD FOR PRODUCING THERMOPLASTIC MOLDING MATERIALS
PROCEDE DE PRODUCTION DE MATIERES A MOULER THERMOPLASTIQUES

(30) Priorität: 21.03.2003 DE 10312745; 22.12.2003 DE 10361064
(43) Veröffentlichungstag der Anmeldung: 04.01.2006
(73) Patentinhaber: BASF SE, 67056 Ludwigshafen (DE)
(72) Erfinder: WEBER, Martin, 67487 Maikammer (DE); GOTTSCHALK, Axel, 67435 Neustadt (DE); HAENSEL, Werner, 67360 Lingenfeld (DE); GÜNTHERBERG, Norbert, 67346 Speyer (DE)
(86) Internationale Anmeldenummer: PCT/EP2004/002877
(87) Internationale Veröffentlichungsnummer: WO 2004/083303

(56) Entgegenhaltungen:
- EP-A- 1 022 117
- FR-A- 2 821 081
- US-A- 5 089 557

## Beschreibung

Die vorliegende Erfindung betrifft ein Verfahren zur Herstellung von Formmassen, enthaltend
A) ein thermoplastisches Polyamid,
B) eine Zusammensetzung, enthaltend
   b1) ein Pfropfcopolymer, enthaltend einen Kautschuk als Pfropfgrundlage und eine Pfropfauflage auf der Basis eines ungesättigten Monomeren und
   b1) ein Matrixpolymer sowie
C) ein kautschukfreies Copolymer, enthaltend
   c1) mindestens 30 Gew.-% Einheiten, die sich von einem vinylaromatischen Monomeren ableiten, bezogen auf das Gesamtgewicht aller Einheiten, die C) enthält,
   c2) Einheiten, die sich von einem Monomeren ableiten, das eine funktionelle Gruppe enthält, die mit den Endgruppen des Polyamides A) reagieren kann
   c3) Einheiten, die sich von einem Monomeren ableiten, das keine funktionellen Gruppen enthält, die mit den Endgruppen des Polyamides A) reagieren,
durch Mischen der Komponenten.

Außerdem betrifft die Erfindung Formmassen, die aus den Komponenten erhältlich sind. Darüber hinaus betrifft die Erfindung die Verwendung der Formmassen zur Herstellung von Formteilen, Folien, Fasern oder Schäumen sowie die Formteile, Fasern, Folien oder Schäume aus diesen Formmassen.

Blends, die Polyamid und Kunststoffe des ABS-Typs enthalten, sind bekannt. Bekannt ist ferner, dass man derartige Blends mit Polymeren, die funktionelle Gruppen aufweisen, die mit den Endgruppen des Polyamides reagieren können, mischen kann. Diese Polymeren wirken verträglichkeitsvermittelnd zwischen der Polyamidphase und der Phase, die die Kunststoffe des ABS-Typs bilden. Dadurch werden die Eigenschaften der Blends verbessert, insbesondere werden die Schlagzähigkeiten wesentlich erhöht.

Blends dieser Art, in denen beispielsweise Copolymere aus Styrol, Acrylnitril und Maleinsäureanhydrid als Verträglichkeitsvermittler eingesetzt werden, sind unter anderem aus der EP-A 202 214, aus Kudva et al. Polymer 41 (2000) 239 - 258 oder aus M. Staal et al. Poster Technische Universiteit Eindhoven, Januar 2003, "Characterization of the Molar Mass Chemical Composition Distribution of Styrene-Acrylonitrile-Maleic Anhydride Terpolymers" bekannt.

Polyamid/ABS-Blends, die Styrolacrylnitrilcopolymere mit Maleinsäureanhydridgruppen und zusätzlich niedermolekulare Anhydride wie Phthalsäureanhydrid enthalten, sind in der EP-A1 784 080 offenbart. Sie zeichnen sich durch ihre guten Tieftemperaturschlagzähigkeiten und Verarbeitungseigenschaften aus.

Glycidylmethacrylat und Methylmethacrylat enthaltende Copolymere als Verträglichkeitsvermittler in Mischungen aus Polyamid und ABS wurden z.B. in Kudva et al. Polymer 39 (1998) 2447-2460 untersucht. Terpolymere aus Styrol, Acrylnitril und Glycidylmethacrylat wurden als Verträglichkeitsvermittler für Mischungen aus Polyestern und ABS vorgeschlagen (Lee et al. Polymer 35 (1994), 5641).

Die Herstellung dieser bekannten Blends erfolgt durch Mischen aller Komponenten in einer Mischvorrichtung, insbesondere in einem Extruder.

Obgleich die bekannten Blends bereits etlichen gute mechanische Eigenschaften zeigen, weisen sie doch ungenügende Steifigkeiten auf. Ein gewisses Steifigkeitsniveau ist jedoch erforderlich, sollen die Blends für die Herstellung von z.B. Gehäusen für Haushaltsartikel, Elektrogeräte, medizinisch-technische Geräte eingesetzt werden oder wenn sie im Automobilbau verwendet werden sollen.

Aus der WO 97/06586 waren Blends bekannt, die als Verträglichkeitsvermittler ein Copolymer aus mindestens 70 Gew.-% Methylmethacrylat bis zu 5 Gew.-% Maleinsäureanhydrid und bis zu 25 Gew.-% weiterer Monomerer, z.B. Styrol, enthalten. Es wird offenbart, dass die Blends auch durch Coextrusion eines Preblends, bestehend aus dem Copolymeren und einem PMMA verträglichen Thermoplasten oder einem Polymeren, das wenigsten eine endständige nucleophile Gruppe enthält und der dritten Komponente hergestellt werden können. Polyamid/ABS-Blends, die Verträglichkeitsvermittler auf Basis von Methylmethacrylat enthalten, erreichen für viele Anwendungen nicht das geforderte Eigenschaftsprofil.

Aufgabe der vorliegenden Erfindung war es, ein Verfahren zu finden, mit dem sich Blends auf der Basis von Polyamid, Kunststoffen wie ABS und einem Verträglichkeitsvermittler hinsichtlich ihrer Steifigkeit optimieren lassen. Eine weitere Aufgabe der vorliegenden Erfindung bestand darin, ein Verfahren zur Herstellung derartiger Blends zu finden, die sich dadurch auszeichnen, dass sich bei ihrer Verarbeitung zu Formteilen im wesentlichen keine oder zumindest eine stark reduzierte Ausbildung von Fließlinien, auch "tigerlines" oder Schubmarkierung genannt, zeigt. Zudem sollen mittels des neuen Verfahrens Blends zur Verfügung gestellt werden, die sich zu Formteilen verarbeiten lassen, deren Oberflächen kratzfest sind.

Demgemäß wurde ein Verfahren zur Herstellung der oben genannten Zusammensetzungen gefunden, das dadurch charakterisiert ist, dass man in einem ersten Schritt ein Pfropfcopolymer (D), enthaltend die Gesamtmenge der Komponente C) und eine Teilmenge der Komponente A) herstellt und in einem zweiten Schritt das Pfropfcopolymer D) mit den anderen Komponenten und der Restmenge der Komponente (A) mischt.

### Komponente A)

Prinzipiell kommen als Komponente A) alle thermoplastischen Polyamide in Betracht. Unter der Komponente A) sind sowohl solche zu verstehen, die ein Polyamid enthalten als auch solche , die aus zwei oder mehr unterschiedlichen Polyamiden bestehen. Das Mischungsverhältnis, in denen die unterschiedlichen Polyamide enthalten sein können, ist frei wählbar. Bevorzugt umfasst die Komponente A) nur ein Polyamid.

Die als Komponente A) in den Formmassen enthaltenen Polyamide umfassen teilkristalline und amorphe Harze mit einem Molekulargewicht (Gewichtsmittelwert) von mindestens 2500 g/mol (bestimmt mittels Gelperationschromatographie (GPC) mit Hexafluorisopropanol als Elutionsmittel und Polymethylmethacrylat als Standard die gewöhnlich als Nylon bezeichnet werden. Solche Polyamide sind hinlänglich beschrieben. Ihre Herstellung ist bekannt oder sie können nach an sich bekannten Methoden hergestellt werden.

Die Polyamide A) können z.B. durch Kondensation einer gesättigten oder einer aromatischen Dicarbonsäure mit 4 bis 12 Kohlenstoffatomen, mit einem gesättigten oder aromatischen Diamin, welches bis 14 Kohlenstoffatome aufweist oder durch Kondensation von ω-Aminocarbonsäuren bzw. Polyaddition von entsprechenden Lactamen hergestellt werden.

Als geeignete gesättigte Dicarbonsäuren seien hier nur Suberinsäure, Azelainsäure oder Sebacinsäure als Vertreter der aliphatischen Dicarbonsäuren, 1,4-Butandiamin, 1,5-Pentandiamin 1,6-Hexandiamin oder Piperazin, als Vertreter der Diamine und Caprolactam, Capryllactam, Önanthlactam, Laurinlactam und ω-Aminoundecansäure als Vertreter von Lactamen bzw. Aminocarbonsäuren genannt.

Aromatische Dicarbonsäuren weisen im Allgemeinen 8 bis 16 Kohlenstoffatome auf. Geeignete aromatische Dicarbonsäuren sind beispielsweise substituierte Terephthalund Isophthalsäuren wie 3-t-Butylisophthalsäure, mehrkernige Dicarbonsäuren, z. B. 4,4'- und 3,3'-Diphenyldicarbonsäure, 4,4'- und 3,3'-Diphenylmethan-dicarbonsäure, 4,4'- und 3,3'-Diphenylsulfondicarbonsäure, 1,4-oder 2,6-Naphthalindicarbonsäure und Phenoxyterephthalsäure.

Als Monomere kommen auch cyclische Diamine, darunter bevorzugt Bis(4-aminocyclohexyl)-methan, Bis(4-amino-3-methylcyclohexyl)methan, Bis(4-aminocyclohexyl)-2,2-propan oder Bis(4-amino-3-methylcyclohexyl)-2,2-propan in Betracht. Als weitere cyclische Diamine seien 1,3- oder 1,4-Cyclohexandiamin oder Isophorondiamin genannt. Des Weiteren kommt auch m-Xylylendiamin in Betracht.

Beispiele für Polyamide, die sich von gesättigten Dicarbonsäuren und Diaminen ableiten sind:
Polytetramethylenadipinsäureamid (Nylon 46), Polyhexamethylenadipinsäureamid (Nylon 66), Polyhexamethylenazelainsäureamid (Nylon 69), Polyhexamethylensebacinsäureamid (Nylon 610), Polyhexamethylendodecandisäureamid (Nylon 612).

Beispiele durch Ringöffnung von Lactamen erhaltener Polyamide sind Polycaprolactam (Nylon 6), Polylaurinsäurelactam, ferner Poly-11-aminoundecansäure.

Es ist auch möglich, Polyamide zu verwenden, die durch Copolykondensation von zwei oder mehr der obengenannten Dicarbonsäuren oder zwei oder mehr der obengenannten Diamine oder auch durch Copolycondensation von zwei oder mehr der obengenannten Polymeren hergestellt worden sind. Beispiele hierfür sind Copolymere aus Adipinsäure, Isophthalsäure oder Terephthalsäure und Hexamethylendiamin oder Copolymere aus Caprolactam, Terephthalsäure und Hexamethylendiamin. Derartige teilaromatische Copolyamide enthalten in der Regel 40 bis 90 Gew.-% Einheiten, die sich von Terephthalsäure und Hexamethylendiamin ableiten. Ein geringer Anteil der Terephthalsäure, vorzugsweise nicht mehr als 10 Gew.-%, der gesamten eingesetzten aromatischen Dicarbonsäuren können durch Isophthalsäure oder andere aromatische Dicarbonsäuren, vorzugsweise solche, in denen die Carboxylgruppen in para-Stellung stehen, ersetzt werden. Teilaromatische Copolyamide können auch Einheiten umfassen, die sich von den obengenannten cyclischen Diaminen ableiten.

Als vorteilhaft für viele Anwendungszwecke haben sich teilaromatische Copolyamide mit 50 bis 80, insbesondere 60 bis 75 Gew.-% Einheiten, die sich von Terephthalsäure und Hexamethylendiamin ableiten und 20 bis 50, vorzugsweise 25 bis 40 Gew.-% Einheiten, die sich von ε-Caprolactam ableiten, erwiesen.

Zu den besonders bevorzugten teilaromatischen Copolyamiden zählen solche, die im wesentlichen aufgebaut sind aus
a1) 30 bis 44, vorzugsweise 32 bis 40 und insbesondere 32 bis 38 mol-% Einheiten, welche sich von Terephthalsäure ableiten,
a2) 6 bis 20, vorzugsweise 10 bis 18 und insbesondere 12 bis 18 mol-% Einheiten, welche sich von Isophthalsäure ableiten,
a3) 43 bis 49,5, vorzugsweise 46 bis 48,5 und insbesondere 46,3 bis 48,2 mol-% Einheiten, welche sich von Hexamethylendiamin ableiten,
a4) 0,5 bis 7, vorzugsweise 1,5 bis 4 und insbesondere 1,8 bis 3,7 mol-% Einheiten, welche sich von aliphatischen cyclischen Diaminen mit 6 bis 30, vorzugsweise 13 bis 29 und insbesondere 13 bis 17 C-Atomen ableiten,
a5) 0 bis 4 mol-% weiteren von b1) bis b4) verschiedenen polyamidbildenden Monomeren,
wobei die Molprozente der Komponenten a1) bis a5) zusammen 100 % ergeben.

Die Diamineinheiten a3) und a4) werden vorzugsweise etwa äquimolar mit den Dicarbonsäureeinheiten a1) und a2) umgesetzt.

Die polyamidbildende Monomere a5) können sich z.B. von Dicarbonsäuren mit 4 bis 16 Kohlenstoffatomen und aliphatischen Diaminen mit 4 bis 16 Kohlenstoffatomen sowie von Aminocarbonsäuren bzw. entsprechenden Lactamen mit 7 bis 12 Kohlenstoffatomen ableiten. Beispiele hierfür sind oben genannt.

Die Schmelzpunkte dieser teilaromatischen Copolyamide liegen in der Regel im Bereich von 280 bis 340°C, bevorzugt von 290 bis 330°C, wobei dieser Schmelzpunkt mit einer hohen Glasübergangstemperatur von in der Regel mehr als 120°C, insbesondere mehr als 130°C (im trockenen Zustand) verbunden ist.

Bei den teilaromatischen Copolyamiden, die die Komponenten a1) bis a5) umfassen, werden solche bevorzugt verwendet, die einen Kristallinitätsgrad über 30 %, bevorzugt über 35 %, und insbesondere über 40 % aufweisen.

Der Kristallinitätsgrad ist ein Maß für den Anteil an kristallinen Fragmenten im Copolyamid und wird durch Röntgenbeugung oder indirekt durch Messung von ΔH_{krist·}mittels DSC bestimmt. Durch Röntgenbeugung kann der Kristallinitätsgrad absolut bestimmt werden. Dabei wird die Intensität der Peaks zum amorphen Halo eines Verhältnis gesetzt (siehe D.I. Bower "An Introduction to Polymer Physics" Cambridge University Press, 2002, S. 118 bis 120).

Sind Proben mit bekanntem Kristallinitätsgrad ,X_{c}, verfügbar, kann eine Korrelation zwischen X_{c} und ΔHₖᵣᵢₛₜ hergestellt werden.

Bevorzugte teilaromatische Copolyamide sind solche, die einen Gehalt an Triamineinheiten, insbesondere Einheiten des Dihexamethylentriamins von unter 0,5 Gew.-% aufweisen. Besonders bevorzugt werden solche teilaromatischen Polyamide mit Triamingehalten von 0,3 Gew.-% oder weniger.

Als Komponente A) kommen sowohl lineare, verzweigte als auch sternförmige Polyamide in Betracht. Bevorzugt werden lineare Polyamide mit einem Schmelzpunkt über 180°C, bestimmt durch DSC-Messung (z.B. D.T. Bower, a.o.a.O. S. 30).

Bevorzugte Polyamide A) sind Polyhexamethylenadipinsäureamid, Polyhexamethylensebacinsäureamid und Polycaprolactam sowie Polyamid 6/6T und Polyamid 66/6T sowie Polyamide, die cyclische Diamine als Comonomere enthalten. Die Polyamide weisen im allgemeinen eine Viskositätszahl von 80 bis 400 ml/g auf, bestimmt an einer 0,5 gew.-%igen Lösung in 96 %iger Schwefelsäure bei 23°C, nach DIN 53727 was einem Molekulargewicht (Zahlenmittel) von etwa 7 000 bis 45 000 g/mol entspricht. Polyamide mit einer Viskositätszahl von 80 bis 300, insbesondere 100 bis 280 ml/g, werden bevorzugt verwendet.

Bevorzugt werden Polyamide, die eine Aminoendgruppe pro Kette aufweisen.

Der Anteil der Polyamide A) an den Formmassen kann in weiten Bereichen variieren. Bevorzugt beträgt er von 10 bis 90, insbesondere von 15 bis 85 besonders bevorzugt von 20 bis 80 Gew.-%, jeweils bezogen auf das Gesamtgewicht der Formmassen.

### Komponente B)

Die Zusammensetzung, die erfindungsgemäß als Komponente B) in den Formmassen enthalten ist, umfasst ein Pfropfcopolymer (b1). Hierunter ist sowohl zu verstehen, dass ein Pfropfcopolymer als auch eine Mischung aus zwei oder mehr unterschiedlichen Pfropfcopolymeren umfasst sein soll.

Das Pfropfcopolymer enthält einen Kautschuk als Pfropfgrundlage b11). Als solche sind prinzipiell alle Kautschuke geeignet, die eine Glasübergangstemperatur von 0°C (ermittelt nach DIN 53765) oder darunter aufweisen. Die Kautschuke können unterschiedlichster Natur sein. Beispielsweise können Silikon-, Olefin, wie Ethylen-, Propylen-, Ethylen/Propylen-, EPDM-, Dien-, Acrylat-, Ethylenvinylacetat-, oder Ethylenbutylacrylat-Kautschuke oder Mischungen aus zwei oder mehr dieser Kautschuke eingesetzt werden. Bevorzugt werden darunter Acrylat- und Dienkautschuke.

In den bevorzugten Mischungen zählen Mischungen aus Dien- und Acrylatkautschuk oder aus Dien- und Silikonkautschuk oder aus Dienkautschuk und Kautschuk auf der Basis von Ethylencopolymeren.

Besonders bevorzugt werden als b11) allerdings Dienkautschuke alleine verwendet. Ganz besonders bevorzugt sind Dienkautschuke, die aus
β11) 50 bis 100 Gew.-% mindestens eines Diens mit konjugierten Doppelbindungen und
β12) 0 bis 50 Gew.-% von einem oder mehreren weiteren monoethylenisch ungesättigten Monomeren,
aufgebaut sind, wobei sich die Gewichtsprozente von β11) und β12) zu 100 addieren.

Als Diene mit konjugierten Doppelbindungen, β11), kommen insbesondere Butadien, Isopren und deren halogensubstituierte Derivate, etwa Chloropren, in Betracht. Bevorzugt sind Butadien oder Isopren, insbesondere Butadien.

Bei den weiteren monoethylenisch ungesättigten Monomeren β12), die auf Kosten der Monomeren β11) im Dienkautschuk enthalten sein können, handelt es sich beispielsweise um:
vinylaromatische Monomere, bevorzugt Styrol oder Styrolderivate wie C₁- bis C₈-Alkylsubstituierte Styrole, wie α-Methylstyrol, p-Methylstyrol, Vinyltoluol; ungesättigte Nitrile wie Acrylnitril, Methacrylnitril;
aliphatische Ester wie C₁- bis C₄-Alkylester der Methacrylsäure oder der Acrylsäure wie Methylmethacrylat, weiterhin auch die Glycidylester, Glycidylacrylat und - methacrylat;
N-substituierte Maleinimide wie N-Methyl-, N-Phenyl- und N-Cyclohexylmaleinimid; Säuren wie Acrylsäure, Methacrylsäure; weiterhin Dicarbonsäuren wie Maleinsäure, Fumarsäure und Itaconsäure sowie deren Anhydride wie Maleinsäureanhydrid; Stickstoff-funktionelle Monomere wie Dimethylaminoethylacrylat, Diethylaminoethylacrylat, Vinylimidazol, Vinylpyrrolidon, Vinylcaprolactam, Vinylcarbazol, Vinylanilin, Acrylamid und Methacrylamid;
aromatische und araliphatische Ester der (Meth)Acrylsäure und wie Phenylacrylat, Phenylmethacrylat, Benzylacrylat, Benzylmethacrylat, 2-Phenylethylacrylat, 2-Phenylethylmethacrylat, 2-Phenoxyethylacrylat und 2-Phenoxyethylmethacrylat; ungesättigte Ether wie Vinylmethylether oder Vinylbutylether.

Selbstverständlich kommen auch Mischungen aus zwei oder mehr dieser Monomeren in Betracht.

Bevorzugte Monomeren β12) sind Styrol, Acrylnitril, Methylmethacrylat, Glycidylacrylat, -methacrylat oder Butylacrylat.

Die Herstellung der Kautschuke ist dem Fachmann bekannt oder kann nach, dem Fachmann bekannten, Methoden erfolgen. So können beispielsweise die Dienkautschuke in einem ersten Schritt hergestellt werden, bei dem sie nicht partikelförmig anfallen, beispielsweise via Lösungspolymerisation oder Gasphasenpolymerisation und dann in einem zweiten Schritt in der wässrigen Phase dispergiert werden (Sekundäremulgierung). Für die Herstellung der Kautschuke werden heterogene, partikelbildende Polymerisationsverfahren bevorzugt. Diese Dispersionspolymerisation kann z.B. in an sich bekannter Weise nach der Methode der Emulsions-, der inversen Emulsions-, Miniemulsions-, Mikroemulsions-, oder Mikrosuspensionspolymerisation im Zulaufverfahren, kontinuierlich oder im Batchverfahren durchgeführt werden. Die Kautschuke können auch in Gegenwart eines vorgelegten feinteiligen Latex hergestellt werden (sog. "Saatlatex-Fahrweise" der Polymerisation). Geeignete Saatlatices bestehen beispielsweise aus Polybutadien oder Polystyrol. Grundsätzlich ist es möglich die Kautschuke nach ihrer Herstellung als Pfropfgrundlage zu verwenden. Sie können jedoch auch vor der Pfropfung zunächst durch Agglomerisationsverfahren zu größeren Teilchen agglomeriert werden.

Verfahren zur Agglomerisation sind dem Fachmann bekannt oder die Agglomerisation kann nach dem Fachmann an sich bekannten Methoden vorgenommen werden. So können physikalische Verfahren wie Gefrier- oder Druckagglomerisationsverfahren verwendet werden. Es können aber auch chemische Methoden eingesetzt werden, um die Primärteilchen zu agglomerisieren. Zu letzteren zählen die Zugabe von anorganischen oder organischen Säuren. Bevorzugt wird die Agglomerisation mittels eines Agglomerisationspolymerisates in Abwesenheit oder Gegenwart eines Elektrolyten, wie einem anorganischen Hydroxid, vorgenommen. Als Agglomerisationspoylmerisate sind beispielsweise Polyethylenoxidpolymere oder Polyvinylalkohole zu nennen. Zu den geeigneten Agglomerisationspolymerisaten zählen Copolymerisate aus C₁- bis C₁₂-Alkylacrylaten oder C₁- bis C₁₂- Methalkylacrylaten und polaren Comonomeren wie Acrylamid, Methacrylamid, Ethacrylamid, n-Butylacrylamid oder Maleinsäureamid.

Bevorzugt weisen die Kautschuke Teilchengrößen (Gewichtsmittelwert d₅₀) im Bereich von 100 bis 2500 nm auf. Die Teilchengrößenverteilung ist bevorzugt nahezu oder völlig monomodal bzw. bimodal.
Die Pfropfcopolymeren b1) enthalten eine Pfropfauflage b12) auf der Basis eines ungesättigten Monomeren, worunter auch zu verstehen ist, dass die Pfropfauflage aus zwei oder mehr ungesättigten Monomeren hergestellt worden kann. Prinzipiell können die Kautschuke mit den unterschiedlichsten ungesättigten Verbindungen gepfropft werden. Entsprechende Verbindungen und Methoden sind dem Fachmann an sich bekannt. Bevorzugt wird eine Pfropfauflage b12) enthaltend
β21) 50 bis 100, bevorzugt 60 bis 100 und besonders bevorzugt 65 bis 100 Gew.-% eines vinylaromatischen Monomeren,
β22) 0 bis 50, bevorzugt 0 bis 40 und besonders bevorzugt 0 bis 35 Gew.-% Acrylnitril oder Methacrylnitril oder deren Mischungen,
β23) 0 bis 40, bevorzugt 0 bis 30 und besonders bevorzugt 0 bis 20 Gew.-% von einem oder mehreren weiteren monoethylenisch ungesättigten Monomeren,.
wobei sich die Anteile der Komponenten β21) bis β23) zu 100 Gew.-% ergänzen.
Als vinylaromatische Monomere kommen die unter β12) genannten vinylaromatischen Verbindungen oder Mischungen aus zwei oder mehren davon, insbesondere Styrol oder α-Methylstyrol, in Betracht. Zu den weiteren monoethylenisch ungesättigten Monomeren zählen die unter β12) aufgeführten aliphatischen, aromatischen und araliphatischen Ester, Säuren, stickstoff-funktionellen Monomere und ungesättigten Ether oder Mischungen dieser Monomeren.

Man kann die Pfropfauflagen b12) in einem oder mehreren Verfahrenschritten herstellen. Dabei können die Monomeren β21), β22) und β23) einzeln oder in Mischung miteinander zugefügt werden. Das Monomerenverhältnis der Mischung kann zeitlich konstant oder ein Gradient sein. Auch Kombinationen dieser Verfahrensweisen sind möglich.

Beispielsweise kann man zunächst Styrol alleine, und danach eine Mischung aus Styrol und Acrylnitril, auf die Pfropfgrundlage b11) polymerisieren.

Bevorzugte Pfropfauflagen b12) sind beispielsweise aus Styrol und/oder α-Methylstyrol und einem oder mehreren der unter β22) und β23) genannten anderen Monomeren. Bevorzugt sind dabei Methylmethacrylat, N-Phenylmaleinimid, Maleinsäureanhydrid und Acrylnitril, besonders bevorzugt Methylmethacrylat und Acrylnitril.

Bevorzugte Pfropfauflagen b12) basieren auf:
b12-1: Styrol
b12-2: Styrol und Acrylnitril,
b12-3: α-Methylstyrol und Acrylnitril,
b12-4: Styrol und Methylmethacrylat.

Besonders bevorzugt beträgt der Anteil an Styrol oder α-Methylstyrol, oder der Anteil der Summe aus Styrol und α-Methylstyrol, mindestens 40 Gew.-%, bezogen auf b12).

Weiterhin eignen sich auch Pfropfpolymerisate mit mehreren "weichen" und "harten" Stufen, vor allem im Falle größerer Teilchen.

Bevorzugt werden Pfropfpolymerisate b1), die (bezogen auf b1)
b11) 30 bis 95, bevorzugt 40 bis 90, insbesondere 40 bis 85 Gew.-% Pfropfgrundlage (d.h. Kautschuk) und
b12) 5 bis 70, bevorzugt 10 bis 60, insbesondere 15 bis 60 Gew.-% einer Pfropfauflage
enthalten.

Im Allgemeinen wird die Pfropfung in Emulsion durchgeführt. Geeignete Verfahrensmaßnahmen sind dem Fachmann bekannt. Soweit bei der Pfropfung nicht gepfropfte Polymere aus den Monomeren b12) entstehen, werden diese Mengen, die in der Regel unter 10 Gew.-% von b1) liegen, der Masse der Komponente b2) zugeordnet.

Die Komponente b2) enthält ein Matrixpolymer, worunter auch Mischungen aus zwei oder mehr unterschiedlichen Matrixpolymeren verstanden werden. Bevorzugt wird der molekulare Aufbau des Matrixpolymeren b2) so gewählt, dass das Matrixpolymer mit der Pfropfauflage verträglich ist. Bevorzugt entsprechen daher die Monomeren b12) denen des Matrixpolymeren b2). Allerdings enthalten die Matrixpolymere bevorzugt keine funktionellen Gruppen, die mit den Endgruppen der Polyamide reagieren können.

Als Matrixpolymer b2) eignen sich z.B. amorphe Polymerisate. Beispielsweise kann es sich um SAN (Styrol-Acrylnitril)-, AMSAN (α-Methylstyrol-Acrylnitril)-, Styrol-Maleinimid-Maleinsäureanhydrid (SNPMIMA), (Styrol-Maleinsäure(anhydrid)-Acrylnitril-Polymerisate oder SMSA (Styrol-Maleinsäureanhydrid) handeln.

Vorzugsweise handelt es sich bei Komponente b2) um ein Copolymerisat aus
b21) 60 - 100 Gew.-%, vorzugsweise 65 - 80 Gew.-%, Einheiten eines vinylaromatischen Monomeren, vorzugsweise des Styrols, eines substituierten Styrols oder eines (Meth)acrylsäureesters oder deren Gemische, insbesondere des Styrols oder α-Methylstyrols oder deren Mischungen,
b22) 0 bis 40 Gew.-%, vorzugsweise 20 - 35 Gew.-%, Einheiten eines ethylenisch ungesättigten Monomers, vorzugsweise des Acrylnitrils oder Methacrylnitrils oder Methylmethacrylats, insbesondere des Acrylnitrils.

Gemäß einer Ausführungsform der Erfindung ist das Matrixpolymer dabei aus 60 - 99 Gew.-% vinylaromatischen Monomeren und 1 - 40 Gew.-% mindestens eines der anderen angegebenen Monomeren aufgebaut.

Gemäß einer Ausführungsform der Erfindung wird als b2) ein Copolymerisat von Styrol und/oder α-Methylstyrol mit Acrylnitril verwendet. Der Acrylnitrilgehalt in diesen Copolymerisaten beträgt dabei 0 - 40 Gew.-%, vorzugsweise 20 - 35 Gew.-%, bezogen auf das Gesamtgewicht von b2).

Die Molekulargewichte (Gewichtsmittelwert M_{w}) liegen in der Regel im Bereich von 50 000 bis 500 000 g/mol, bevorzugt im Bereich von 70 000 bis 450 000 g/mol.

Die Matrixpolymeren b2) sind an sich bekannt oder können nach dem Fachmann bekannten Methoden hergestellt werden.

Das Verhältnis der Komponenten b1) zu b2) kann in weiten Bereichen variieren. Meist enthalten die Zusammensetzungen B) von 20 bis 85, bevorzugt von 25 bis 80 Gew.-% b1) und von 15 bis 80, bevorzugt von 20 bis 75 Gew.-% b2), wobei sich die Gewichtsanteile von b1) und b2) zu 100 addieren.

In der Regel werden im erfindungsgemäßen Verfahren von 8 bis 70, bevorzugt von 12 bis 60, insbesondere von 15 bis 55 Gew.-% der Komponente B, bezogen auf das Gesamtgewicht der Formmasse, eingesetzt.

### Komponente C)

Komponente C) enthält erfindungsgemäß ein kautschukfreies Copolymer. Hierunter ist auch zu verstehen, dass die Komponente C) eine Mischung aus zwei oder mehr dieser Copolymere umfassen kann.

Strukturell ist das Copolymeren C) aus mindestens 30 Gew.-%, bezogen auf das Gesamtgewicht aller Einheiten, die C) enthält, Einheiten (c1) aufgebaut, die sich von vinylaromatischen Monomeren ableiten. Ansonsten ist der strukturelle Aufbau in weiten Grenzen variierbar und richtet sich vor allem danach, dass die Copolymere C) zumindest teilweise, bevorzugt überwiegend mit der Komponente B mischbar sein soll. Auch soll die Art und Menge der funktionellen Gruppen so beschaffen sein, dass eine Reaktion mit den Endgruppen der Polyamide A) stattfinden kann.

Nach einer der bevorzugten Ausführungsformen basieren die Copolymeren C auf einer vinylaromatischen Verbindung (c1) und enthalten als Einheiten (c2) Dicarbonsäureanhydride (c21) oder Dicarbonsäureimide (c22) oder Mischungen aus c21) und c22) und Einheiten (c3), die sich von weiteren Monomeren ableiten, die keine Gruppen enthalten, die mit den Endgruppen des Polyamides reagieren, oder nur um ein viel-faches langsamer.

Gemäß dieser Ausführungsform beträgt der Anteil der Einheiten c1) bevorzugt von 50 bis 85, insbesondere von 60 bis 80 Gew.-%. Ganz besonders bevorzugt enthalten die Copolymeren C) von 65 bis 78 Gew.-% Einheiten, die sich von aromatischen Vinylverbindungen ableiten. Die Gew.-% Angaben sind jeweils bezogen auf das Gesamtgewicht von c1) bis c3).

Der Anteil der Einheiten c21), die sich von α,β-ungesättigten Dicarbonsäureanhydriden ableiten, beträgt bevorzugt von 0,3 bis 25 Gew.-%. Copolymere C) mit wesentlich weniger als 0,3 Gew.-%, beispielsweise solche mit weniger als 0,1 Gew.-% der Einheiten c21) sind im Allgemeinen nicht hinreichend reaktionsfähig. Solche mit wesentlich mehr als 25 Gew.-% lassen sich meist nicht mehr gut verarbeiten, da sie zu stark vernetzend wirken. Bevorzugt enthalten die Copolymeren C) von.0,5 bis 15 Gew.-%, insbesondere von 0,7 bis 10 Gew.-%, ganz besonders bevorzugt von 0,8 bis 5 Gew-% c21), beispielsweise von 1 bis 3 Gew.-% c21). Die Gew.-% Angaben beziehen sich dabei jeweils auf das Gesamtgewicht der Einheiten c1) bis c3).

Anstelle der Einheiten c21) oder, wie es bevorzugt ist, darüber hinaus können die Copolymeren C) Einheiten c22) enthalten, die sich von α,β-ungesättigten, insbesondere cyclischen Dicarbonsäureimiden ableiten. Diese sind im allgemeinen von 0 bis 40 Gew.-% in den Copolymeren C) enthalten. Bevorzugte Copolymere C) enthalten von 0 bis 30 Gew.-% c22), insbesondere von 0 bis 25 Gew.-%, wobei sich die Gew.-% Angaben jeweils auf das Gesamtgewicht der Einheiten c1 bis c3) bezieht.

Ferner können die Copolymere C) noch 14,7 bis 40 Gew.-%, bevorzugt 19 bis 35 Gew.-%, insbesondere 21,3 bis 33 Gew.-% Einheiten c3), bezogen auf das Gesamt- ' gewicht der Einheiten c1) bis c3), enthalten, die sich von weiteren radikalisch polymerisierbaren Verbindungen ableiten.

Als aromatische Vinylverbindungen c1) kommen vor allem Styrol und Styrolderivate in Betracht. Zu den geeigneten Styrolderivaten zählen α-Methylstyrol oder am aromatischen Kern substituierte Styrolderivate wie Vinyltoluol, t-Butylstyrol oder Chlorstyrol. Selbstverständlich können auch Mischungen unterschiedlicher aromatischer Vinylverbindungen eingesetzt werden. Ganz besonders bevorzugt wird Styrol verwendet.

Zu den bevorzugten α,β-ungesättigten Dicarbonsäureanhydriden c21) zählen cyclische und zwar solche mit 2 bis 20 Kohlenstoffatomen. Die Doppelbindung kann sowohl exocyclisch als auch endocyclisch sein. Darunter sind Maleinsäureanhydrid, Methylmaleinsäureanhydrid oder Itakonsäureanhydrid besonders bevorzugt. Mischungen unterschiedlicher Dicarbonsäureanhydride können ebenfalls verwendet werden. Ganz besonders bevorzugt wird Maleinsäureanhydrid alleine eingesetzt.

Im allgemeinen entsprechen die α,β-ungesättigten Dicarbonsäureimide c22) den obengenannten Dicarbonsäureanhydriden. Der Substituent am Stickstoff ist in der Regel ein C₁-bis C₂₀-Alkyl, C₄-bis C₂₀-Cycloalkyl, C₁-bis C₁₀-Alkyl-C₆-bis C₁₈-Aryl oder ein C₆-bis C₁₈-Arylrest.

Die Alkylreste können sowohl linear als auch verzweigt sein und mit einem oder mehreren Sauerstoffatomen unterbrochen sein, wobei die Sauerstoffatome nicht direkt mit den Stickstoffatomen und nicht direkt mit einem anderen Sauerstoffatom verknüpft sind. Zu diesen Alkylresten zählen Methyl, Ethyl, n-Propyl, i-Propyl, n-Butyl, i-Butyl, t-Butyl, n-Hexyl, n-Decyl und n-Dodecyl. Die Cycloalkylreste können sowohl unsubstituiert als auch substituiert sein. Geeignete Substituenten sind z.B. Alkylgruppen wie Methyl oder Ethyl. Als Beispiele für Cycloalkylreste sind Cyclobutyl, Cyclopentyl, Cyclohexyl und p-Methylcyclohexyl zu nennen. Die Alkylgruppe der Alkylarylreste kann sowohl linear als auch verzweigt sein und die Alkylarylreste können auch Substituenten haben. Beispiele derartiger Substituenten sind Alkylgruppen wie Methyl oder Ethyl aber auch Halogenatome wie Chlor oder Brom. Als Alkylarylreste können beispielsweise Benzyl, Ethylphenyl oder p-Chlorbenzyl verwendet werden. Ebenso können die Arylreste substituiert oder unsubstituiert sein, wobei z.B. Alkylgruppen wie Methyl oder Ethyl oder Halogenatome wie Chlor oder Brom geeignete Substituenten sind. Zu den bevorzugten Arylresten zählen Phenyl und Naphthyl. Ganz besonders bevorzugte Reste sind Cyclohexyl oder Phenyl.

Beispielhaft für Einheiten c3) seien hier Acrylsäure und Acrylsäurederivate wie Methacrylsäure, Acrylsäurealkylester wie Acrylsäureethylester, Methacrylsäuremethylester, Methacrylsäureethylester oder Methyacrylsäurecyclohexylester oder ungesättigte Nitrile wie Acrylnitril, Methacrylnitril genannt. Mischungen dieser Monomeren kommen ebenfalls in Betracht. Ganz besonders bevorzugt wird Acrylnitril alleine verwendet.

Als bevorzugte Copolymeren C) dieser Ausführungsform sind beispielhaft die mit der folgenden Zusammensetzung genannt:
Copolymere, die
   c1) von 50 bis 85 bevorzugt von 60 bis 81 Gew.-% Styrol,
   c2) von 0,5 bis 10 bevorzugt von 1 bis 5 Gew.-% Maleinsäureanhydrid und
   c3) von 14,5 bis 40 , bevorzugt von 18 bis 35 Gew.-% Acrylnitril enthalten, wobei sich die Anteile von c1) bis c3) zu 100 Gew.-% addieren.

Die Copolymeren C) dieser Ausführungsform enthalten die Einheiten c1) bis c3) bevorzugt in einer statistischen Verteilung. In der Regel weisen die Copolymeren C) Molekulargewichte M_{w} (Gewichtsmittelwert) von 30 000 bis 500 000, bevorzugt 50 000 bis 250 000, insbesondere 70 000 bis 200 000 g/mol auf, bestimmt mittels GPC mit Tetrahydrofuran (THF) als Elutionsmittel und Polystyrol-Eichung.

Die Copolymeren C) dieser Ausführungsform lassen sich z.B. dadurch herstellen, dass man die entsprechenden Monomeren radikalisch polymerisiert. Dabei kann die Umsetzung sowohl in Suspension oder Emulsion als auch in Lösung oder Substanz durchgeführt werden, wobei letzteres bevorzugt wird. Die radikalische Reaktion lässt sich im allgemeinen mit den üblichen Methoden initiieren wie Licht oder bevorzugt mit Radikalstartern wie Peroxiden z.B. Benzoylperoxid. Auch die thermisch initiierte Polymerisation ist möglich.

Daneben können die Copolymeren C) dieser Ausführungsform auch dadurch hergestellt werden, dass zunächst die Komponenten c1), c21) und gegebenenfalls c3) miteinander in einer radikalischen Reaktion umgesetzt werden und anschließend die in dem Reaktionsprodukt enthaltenen Anhydridgruppen teilweise mit entsprechenden primären Aminen oder Ammoniak in Imidgruppen überführt werden, so dass die Einheiten c22) entstehen. Diese Reaktion wird in der Regel in Gegenwart eines tertiären Amins als Katalysator bei Temperaturen von 80 bis 350°C ausgeführt.

Gemäß einer anderen bevorzugten Ausführungsform enthalten die Copolymere C) anstelle der Einheiten c21) oder c22) oder deren Mischungen Einheiten (c23), die sich von einem ungesättigten Monomeren ableiten, das eine Epoxygruppe enthält. Die Einheiten c23) können auch auf einer Mischung aus zwei oder mehr unterschiedlichen Monomeren dieser Art basieren. Die Monomeren können eine oder auch zwei oder mehr Epoxygruppen aufweisen. Besonders bevorzugt wird Glycidylmethacrylat alleine verwendet.

Zu den bevorzugten Copolymeren C) dieser Ausführungsform zählen:
Copolymere, enthaltend
   c1) von 65 bis 85, bevorzugt von 70 bis 80 Gew.-% Styrol,
   c23) von 0,5 bis10, bevorzugt von 1 bis 5 Gew.% Glycidylmethacrylat und
   c3) von 14,5 bis 34,5 Gew.-%, bevorzugt von 19 bis 29 Gew.-% Acrylnitril,
wobei sich die Anteile von c1) bis c3) zu 100 Gew.-% addieren.

Die Copolymeren C) dieser Ausführungsform können z.B. durch Suspensenspolymerisation in Polyvinylalkohol in Gegenwart eines peroxidischen Initiators hergestellt werden.

Die Copolymeren C) dieser Ausführungsform weisen in Regel Molekulargewichte (Gewichtsmittelwert Mw), im Bereich von 50 000 bis 1 000 000, bevorzugt von 70 000 bis 500 000 g/mol, bestimmt gemäß GPC mit THF als Elutionsmittel gegen Polystyrolstandard, auf.

In der Regel werden in dem erfindungsgemäßen Verfahren von 2 bis 80, bevorzugt 3 bis 18, insbesondere 5 bis 15 Gew.-%, bezogen auf das Gesamtgewicht der Formmasse, an Komponente C eingesetzt.

### Pfropfcolymere D)

Erfindungsgemäß wird in einem ersten Schritt des Verfahrens unter Verwendung der Gesamtmenge des Copolymeren C) und einer Teilmenge des Polyamides A) ein Pfropfcopolymer (D) hergestellt.

Hierfür können alle geeigneten Pfropfcopolymerisationsmethoden eingesetzt werden. Als besonders einfach hat es sich jedoch herausgestellt, die Umsetzung der beiden Komponenten in der Schmelze in Abwesenheit eines Lösungsmittels durchzuführen. Es ist möglich die beiden Komponenten beispielsweise in Form ihrer Pulver oder als Granulate vorzumischen und anschließend zusammen aufzuschmelzen. Andererseits kann entweder das Copolymere C) oder die gewählte Menge an Polyamid A) vorgelegt, aufgeschmolzen und dann die jeweils andere Komponente zugegeben werden. Die Zugabe der jeweils anderen Komponente kann durch Zudosieren in Form ihres Pulvers, Granulates oder Schmelze vorgenommen werden. Die Zugabe der jeweils anderen Komponente kann auf einmal, portionsweise oder in einem Zulaufverfahren gleichmäßig oder mit einem Zulaufprofil erfolgen.

In dem erfindungsgemäßen Verfahren wird es bevorzugt, die Komponente C) und die Teilmenge des Polymeren A) in Form ihrer Granulate vorzumischen und anschließend gemeinsam aufzuschmelzen. Im Prinzip können die Granulate durch unterschiedlichste Methoden miteinander gemischt werden, beispielsweise per Hand, Flügelradmischer, Fluidmischer, Röhnradmischer. Besonders bevorzugt werden die Granulate bei Raumtemperatur mittels eines Flügelradmischers und innerhalb von 1-5 Minuten miteinander vermischt.

Als Schmelzaggregat kommen beispielsweise Maxwell-Mischer, Banbury-Mischer, Kneter, Buss-Co-Kneter, Farrell-Kneter oder ein-, zwei oder mehrwellige Extruder wie Ring- oder Planetwalzenextruder in Betracht.

Bei den Zweiwellen-Extrudern können solche mit gleichsinnig drehenden oder solche mit gegenläufig drehenden Wellen eingesetzt werden, wobei die gleichsinnig drehenden, kämmenden besonders bevorzugt sind. Die bevorzugt eingesetzten gleichsinnig drehenden Zweiwellen-Extruder sind in der Regel ausgestattet mit mindestens einer Einzugszone, die mit fördernden Schneckenelementen versehen ist, mindestens einer Aufschmelzzone, versehen mit knetenden und rückfördernden Elementen, mindestens einer Mischzone mit fördernden, rückfördernden und knetenden Elementen. Dabei ist es möglich, dass auch spezielle Mischelemente zum Einsatz kommen, beispielsweise Zahnmischelemente, Schmelzmischelemente oder Turbinenmischelemente. Bevorzugt enthalten die Extruder je eine Einzugszone, Aufschmelzzone und Mischzone. Darüber hinaus weisen die bevorzugten Extruder meist eine, zwei oder mehr Entgasungszonen auf. Besonders bevorzugt schließen diese sich an die (letzte) Mischzone an. Die Entgasungszonen können unter Normaldruck, Überdruck oder Vakuum betrieben werden. Bevorzugt werden die Entgasungszonen unter Normaldruck oder Vakuum betrieben. Besonders bevorzugt werden die Entgasungszonen unter einem Vakuum von 10 bis 900 mbar, bevorzugt 20 bis 800 mbar, insbesondere 30 bis 600mbar betrieben. Anschließend an die Entgasungszone bzw. -Zonen weisen die bevorzugten Extruder im Allgemeinen eine Austragszone auf und eine Granuliereinheit. Letztere kann z.B. eine Stranggranulierung, Unterwassergranulierung oder Wasserringgranulierung sein, wobei Strang- und Unterwassergranulierung bevorzugt werden. Selbstverständlich kann die Austragszone auch anstelle dessen eine Spritzgusseinheit sein.

Im Allgemeinen liegt die Temperatur bei der Herstellung der Pfropfcopolymere D) im Schmelzeverfahren im Bereich von 200 bis 350 °C, bevorzugt im Bereich von 220 bis 340 °C.

Erfindungsgemäß wird die Gesamtmenge der Komponente C) mit einer Teilmenge der Komponente A) zu den Pfropfcopolymeren D) umgesetzt, wobei die Menge an Komponente A) in weiten Bereichen variieren kann. Die eingesetzte Teilmenge an A) sollte jedoch so bemessen sein, dass einerseits eine hinreichende Menge an Pfropfcopolymeren D) gebildet wird, andererseits nicht ein großer Überschuss an Polyamid A) neben dem Pfropfcopolymeren besteht. Die Pfropfcopolymeren D) können von 5 bis 95 Gew.-%, bevorzugt von 10 bis 90 Gew.-% an Copolymeren C) und von 5 bis 95 Gew.-%, bevorzugt von 10 bis 90 Gew.-% an Polyamid A) enthalten. Besonders bevorzugt wird die Menge an Polyamid so bemessen, dass das molare Verhältnis der funktionellen Gruppen der Komponente C) zu den Aminoendgruppen des Polyamids A) von 0,8 : 1 bis 1,3 : 1 beträgt. Bevorzugt beträgt es von 0,9 : 1 bis 1,3 : 1.

Die so hergestellten Pfropfcopolymeren D) können mit der Restmenge der Komponente A) sowie mit der Komponente B) und falls gewünscht mit weiteren Komponenten gemischt werden.

### Komponente E)

Als weitere Komponente kann eine niedermolekulare Verbindung mitverwendet werden, die nur eine Dicarbonsäureanhydridgruppe aufweist. Es können aber auch zwei oder mehr dieser Verbindungen als Komponente E) verwendet werden. Diese Verbindungen können neben der Dicarbonsäureanhydridgruppe weitere funktionelle Gruppen enthalten, die mit den Endgruppen der Polyamide reagieren können. Geeignete Verbindungen E) sind z.B. C₄- bis C₁₀-Alkyldicarbonsäureanhydride, beispielsweise Bersteinsäureanhydrid, Glutarsäureanhydrid, Adipinsäureanhydrid. Ferner kommen cycloaliphatische Dicarbonsäureanhydride wie 1,2-Cyclohexandicarbonsäureanhydrid in Betracht. Darüber hinaus können aber auch Dicarbonsäureanhydride, die ethylenisch ungesättigte oder aromatische Verbindungen sind, eingesetzt werden, z.B. Maleinsäureanhydrid, Phthalsäureanhydrid oder Trimellitsäureanhydrid.

Der Anteil der Komponente E) beträgt im Allgemeinen von 0 bis 3, bevorzugt von 0,001 bis 2 Gew.-%, bezogen auf das Gesamtgewicht der Komponenten A bis F.

### Komponente F)

Die Formmassen können Zusatzstoffe enthalten. Deren Anteil beträgt in der Regel von 0 bis 60, bevorzugt von 0 bis 50 Gew.-%, bezogen auf das Gesamtgewicht der Komponenten A bis F.

Als solche kommen z.B. teilchenförmige mineralische Füllstoffe in Betracht. Hierunter eignen sich amorphe Kieselsäure, Carbonate wie Magnesiumcarbonat (Kreide), gepulverter Quarz, Glimmer, unterschiedlichste Silikate wie Tone, Muskovit, Biotit, Suzoit, Zinnmaletit, Talkum, Chlorit, Phlogophit, Feldspat, Calciumsilikate wie Wollastonit oder Kaolin, besonders kalzinierter Kaolin.

Nach einer besonders bevorzugten Ausführungsform werden teilchenförmige Füllstoffe verwendet, von denen mindestens 95 Gew.-%, bevorzugt mindestens 98 Gew.-% der Teilchen einen Durchmesser (größte Ausdehnung), bestimmt am fertigen Produkt, von weniger als 45 µm, bevorzugt weniger als 40 µm aufweisen und deren sogenanntes Apektverhaltnis vorzugsweise im Bereich von 1 bis 25, bevorzugt im Bereich von 2 bis 20 liegt, bestimmt am fertigen Produkt, d.h. in der Regel einem Spritzgußformteil. Die Teilchendurchmesser können dabei z.B. dadurch bestimmt werden, dass elektronenmikroskopische Aufnahmen von Dünnschnitten der Polymermischung aufgenommen und mindestens 25, bevorzugt mindestens 50 Füllstoffteilchen für die Auswertung herangezogen werden. Ebenso kann die Bestimmung der Teilchendurchmesser über Sedimentationsanalyse erfolgen, gemäß Transactions of ASAE, Seite 491 (1983). Der Gewichtsanteil der Füllstoffe, der weniger als 40 µm beträgt, kann auch mittels Siebanalyse gemessen werden. Das Aspektverhältnis ist das Verhältnis von Teilchendurchmesser zu Dicke (größter Ausdehnung zu kleinster Ausdehnung).

Besonders bevorzugt werden als teilchenförmige Füllstoffe Talkum, Kaolin, wie calcinierter Kaolin oder Wollastonit oder Mischungen aus zwei oder allen dieser Füllstoffe. Darunter wird Talkum mit einem Anteil von mindestens 95 Gew.-% an Teilchen mit einem Durchmesser von kleiner als 40 µm und einem Aspektverhältnis von 1,5 bis 25, jeweils bestimmt am fertigen Produkt, besonders bevorzugt. Kaolin hat bevorzugt einen Anteil von mindestens 95 Gew.-% an Teilchen mit einem Durchmesser von kleiner als 20 µm und einem Aspektverhältnis von 1,2 bis 20, jeweils bestimmt am fertigen Produkt. Diese Füllstoffe können in Mengen von 0 bis zu 40 Gew.-%, bevorzugt bis 30 Gew.-%, bezogen auf das Gesamtgewicht von A bis F, eingesetzt werden.

Als Komponente F) können auch faserförmige Füllstoffe wie Kohlenstofffasern, Kaliumtitanat-Whisker, Aramidfasern oder bevorzugt Glasfasern eingesetzt werden, wobei mindestens 50 Gew.-% der faserförmigen Füllstoffe (Glasfasern) eine Länge von mehr als 50 µm aufweisen. Die verwendeten (Glas)fasern können vorzugsweise einen Durchmesser von bis zu 25 µm, besonders bevorzugt 5 bis 13 µm aufweisen. Vorzugsweise weisen mindestens 70 Gew.-% der Glasfasern eine Länge von mehr als 60 µm auf. Besonders bevorzugt beträgt im fertigen Formteil die mittlere Länge der Glasfasern 0,08 bis 0,5 mm. Die Länge der Glasfasern bezieht sich auf ein fertiges Formteil, das beispielsweise nach dem Spritzgießen erhalten wird. Dabei können die Glasfasern den Formmassen bereits in der entsprechend langer Form oder auch in Form von Endlossträngen (Rovings) zugesetzt werden. Im Allgemeinen werden diese Fasern in Mengen von 0 bis 60, bevorzugt bis 50 Gew.-%, bezogen auf das Gesamtgewicht von A bis F eingesetzt.

Als Komponente F) können phosphorhaltige Flammschutzmittel eingesetzt werden. Beispiele sind Tri-(2,6- dimethylphenyl)phosphat, Triphenylphosphat, Tricresylphosphat, Diphenyl-2-ethyl-cresylphosphat, Diphenyl-cresylphosphat, Tri(isopropylphenyl)phosphat sowie Phosphorsäure-bis-phenyl-(4-phenyl)ester, Phosphorsäure-phenyl-bis- (4 - phenylphenyl)ester, Phosphorsäure-tris-(4-phenylphenyl)ester, Phosphorsäure-bis-phenyl(benzylphenyl)ester, Phosphorsäure-phenyl-bis-(benzylphenyl)ester, Phosphorsäure-tris-(benzylphenyl)ester, Phosphorsäure-phenyl-bis-[1-phenylethylphenyl]ester, Phosphorsäure-phenyl-bis-[1-methyl-1-phenylethylphenyl]ester und Phosphorsäure-phenyl-bis-[4-(1-phenethyl)-2,6-dimethylphenyl]ester. Sie können auch im Gemisch mit Triphenylphosphinoxid oder Tri-(2,6-dimethylphenyl) phosphinoxid eingesetzt werden.

Zudem sind als Flammschutzmittel Resorcinoldiphosphat und entsprechend höhere Oligomere, Hydrochinondiphosphat und entsprechende höhere Oligomere bevorzugt.

Die Flammschutzmittel werden in der Regel in Mengen von 0 bis 20, vorzugsweise 0 bis 17,5 Gew.-% eingesetzt. Bei Vorliegen werden sie bevorzugt in Mengen von 0,4 bis 10 Gew.-% eingesetzt. Die Mengenangaben sind jeweils bezogen auf das Gesamtgewicht von A bis F.

Als weitere Zusatzstoffe sind beispielsweise Verarbeitungshilfsmittel, Stabilisatoren und Oxidationsverzögerer, Mittel gegen Wärmezersetzung und Zersetzung durch ultraviolettes Licht, Gleit- und Entformungsmittel, Farbstoffe und Pigmente sowie Weichmacher zu nennen. Deren Anteil beträgt im allgemeinen 0 bis 45, vorzugsweise 0 bis 20, insbesondere 0 und sofern sie vorliegen von 0,2 bis 10 Gew.-%, bezogen auf das Gesamtgewicht von A bis F.

Pigmente und Farbstoffe sind allgemein in Mengen von 0 bis 4, bevorzugt 0 bis 3,5 und insbesondere 0 und sofern sie vorliegen von 0,5 bis 3 Gew.-%, bezogen auf das Gesamtgewicht von A bis F enthalten.

Die Pigmente zur Einfärbung von Thermoplasten sind allgemein bekannt. Als erste bevorzugte Gruppe von Pigmenten sind Weißpigmente zu nennen wie Zinkoxid, Zinksulfid, Bleiweiß (2PbCO₃·Pb(OH)₂), Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet.

Schwarze Farbpigmente, die erfindungsgemäß eingesetzt werden können, sind Eisenoxidschwarz (Fe3O4), Spinellschwarz (Cu(Cr, Fe)2O4), Manganschwarz (Mischung aus Mangandioxid, Siliciumoxid und Eisenoxid), Kobaltschwarz und Antimonschwarz sowie besonders bevorzugt Ruß, der meist in Form von Furnace- oder Gasruß eingesetzt wird.

Selbstverständlich können zur Einstellung bestimmter Farbtöne anorganische Buntpigmente erfindungsgemäß eingesetzt werden. Weiterhin kann es von Vorteil sein, die genannten Pigmente bzw. Farbstoffe in Mischung einzusetzen, z.B. Ruß mit Kupferphthalocyaninen, da allgemein die Farbdispergierung im Thermoplasten erleichtert wird.

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Lithium-Halogenide, ggf. in Verbindung mit Kupfer-(I)-Halogeniden, z.B. Chloriden, Bromiden und Iodiden. Die Halogenide, insbesondere des Kupfers, können auch noch elektronenreiche p-Liganden enthalten. Als Beispiel für derartige Kupferkomplexe seien Cu-Halogenid-Komplexe mit z.B. Triphenylphosphin genannt. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, HALS, gegebenenfalls in Verbindung mit phosphorhaltigen Säuren bzw. deren Salze, und Mischungen dieser Verbindungen, vorzugsweise in Konzentrationen bis zu 2 Gew.-%, bezogen auf das Gesamtgewicht von A bis F, einsetzbar.

Beispiele für UV-Stabilisatoren sind verschiedene substituierte Resorcine, Salicylate, Benzotriazole und Benzophenone, die im allgemeinen in Mengen bis zu 2 Gew.-%, bezogen auf das Gesamtgewicht von A bis F eingesetzt werden.

Gleit- und Entformungsmittel, die in der Regel in Mengen bis zu 1 Gew.-%, bezogen auf das Gesamtgewicht von A bis F zugesetzt werden, sind Stearinsäure, Stearylalkohol, Stearinsäurealkylester und -amide sowie Ester des Pentaerythrits mit langkettigen Fettsäuren. Es können auch Salze des Calciums, Zinks oder Aluminiums der Sterainsäure sowie Dialkylketone, z.B. Distearylketon, eingesetzt werden. Weiterhin können auch Ethylenoxid-Propylenoxid-Copolymere als Gleit- und Entformungsmittel verwendet werden.

Es hat sich herausgestellt, dass durch Zugabe von Stearaten oder Silikonöl in Mengen von 0,3 bis 1,5 Gew.-%, bezogen auf das Gesamtgewicht der Formmassen, die Bildung von Fließlinien bei der Verarbeitung erheblich reduziert werden kann. Außerdem sind die Formteile aus den Formmassen, die diese Additive enthalten, besonders kratzfest. Bevorzugt werden für diesen Zweck die Stearate oder Silikonöle in Mengen im Bereich von 0,3 bis 1,3, insbesondere von 0,5 bis 1 Gew.-%, bezogen auf das Gesamtgewicht der Formmassen zugegeben.

Hierbei können z.B. die vorstehend genannten Salze der Stearinsäure verwendet werden. Es ist auch möglich, eine Mischung aus zwei oder mehr unterschiedlichen Salzen der Stearinsäure einzusetzen. Als Silikonöle kommen bevorzugt solche in Betracht, die sich von linearen Polysiloxanen ableiten. Besonders bevorzugt werden lineare Polydimethylsiloxane. Zu den besonders bevorzugten Silikonölen zählen solche mit einer Viskosität im Bereich von 20 bis 100 000, bevorzugt von 100 bis 60 000 mPas (dynamische Viskosität bei 25°C).

Es ist auch möglich, eine Mischung aus zwei oder mehr unterschiedlichen Silikonölen einzusetzen. Mischungen aus einem oder einer Mischung unterschiedlicher Stearate mit einem oder einer Mischung unterschiedlicher Silikonöle kommt ebenfalls in Betracht. Beispielsweise kann eine Mischung aus Calziumstearat mit Polydimethylsiloxan verwendet werden. Bevorzugt wird jedoch entweder ein Stearat oder ein Silikonöl alleine eingesetzt. Als besonders bevorzugtes Stearat wird Calziumstearat und als besonders bevorzugtes Silikonöl wird Polydimethylsiloxan eingesetzt. Als ganz besonders vorteilhaft hat es sich erwiesen, Calziumstearat alleine zu verwenden.

Das Stearat bzw. das Silikonöl oder deren Mischungen können auf unterschiedlichste Weise in die Formmassen eingebracht werden. Beispielsweise können sie getrennt oder in Mischung zudosiert werden. Dabei ist es z.B. möglich, diese Additive zusammen mit den anderen Komponenten oder nach Zugabe einzelner der übrigen Komponenten zuzugeben und mit diesen zu vermischen. Es ist aber auch möglich, diese Additive z.B. erst zu den granulierten Formmassen zuzugeben und diese auf die Oberfläche der Granulate aufzubringen.

Die Herstellung der erfindungsgemäßen thermoplastischen Formmassen erfolgt nach an sich bekannten Verfahren durch Mischen der Restmenge an Komponente A) mit den Komponenten B) und D) sowie falls vorhanden den Komponenten E) und F). Es kann vorteilhaft sein, einzelne Komponenten z.B. die Restmenge A) mit der Komponente E) oder die Komponente B) mit F) oder auch D) mit F) vorzumischen. Auch das Mischen der Komponenten in Lösung unter Entfernen der Lösungsmittel ist möglich, allerdings weniger bevorzugt.

Das Mischen der beispielsweise trockenen Komponenten kann nach allen bekannten Methoden erfolgen. Vorzugsweise geschieht das Mischen bei Temperaturen von 200 bis 320°C durch gemeinsames Extrudieren, Kneten oder Verwalzen der Komponenten, wobei die Komponenten gegebenenfalls zuvor aus der bei der Polymerisation erhaltenen Lösung oder aus der wässrigen Dispersion isoliert worden sind.

Die erfindungsgemäßen thermoplastischen Formmassen können nach den bekannten Verfahren der Thermoplastverarbeitung verarbeitet werden, beispielsweise durch Extrudieren, Spritzgießen, Kalandrieren, Hohlkörperblasen oder Sintern.

Die erfindungsgemäßen Formmassen können zur Herstellung von Folien, Fasern, Formkörpern oder Schäumen eingesetzt werden. Zudem können sie besonders bevorzugt zur Herstellung von Gehäuse- oder Chassieteilen oder gesamten Gehäusen verarbeit werden. Sie finden aber auch Anwendung als Karosserieteile im Automobilsektor und können insbesondere zur Herstellung von großflächigen Automobilteilen eingesetzt werden.

### Beispiele

Die Viskositätszahl der Polyamide wurde nach DIN 53 727 an 0,5 Gew.%-igen Lösungen in 96 Gew.-% Schwefelsäure bei 23°C ermittelt.

Die Viskositätszahl der Terpolymeren wurde in Dimethylformamid bei 25°C an 0,5 gew.-%igen Lösungen bestimmt.

Die Wärmeformbeständigkeit der Proben wurde mittels der Vicat-Erweichungstemperatur bestimmt. Die Vicat-Erweichungstemperatur wurde nach DIN 53 460, mit einer Kraft von 49,05 N und einer Temperatursteigerung von 50 K je Stunde, an Normkleinstäben ermittelt.

Die Kerbschlagzähigkeit der Produkte wurde an ISO-Stäben nach ISO 179 1 eA bestimmt.

Die Schädigungsarbeit der Proben wurde nach ISO 6603 an Platten der Dicke 3 mm bestimmt. Die Messung erfolgte bei -30°C.

Die Fließfähigkeit wurde nach ISO 1133 bei 240°C und 5 kg Belastung bestimmt.

Die Steifigkeit der Materialien wird durch den im Zugversuch nach ISO 527 ermittelten E-Modul charakterisiert.

Zur Beurteilung der Schubmarkierung (Fließlinien) werden Platten unterschiedlicher Dicke und unterschiedlicher Oberflächenrauhigkeit spritzgegossen (Platte 1: 350 x 120 x 1 mm, glatte Oberfläche; Platte 2: 210 x 175 x 2 mm, erodierte Oberfläche). Die Oberflächen werden visuell nach der Skala von 1 bis 5 beurteilt: 1 (schlecht, d.h. Schubmarkierungen ausgeprägt und markant), 5 (gut, d.h. Schubmarkierungen mit bloßem Auge nicht sichtbar).

Zur Bestimmung der Kratzfestigkeit wurden die Oberflächen der Platten mit Schmirgelpapier beansprucht.

Anschließend wurde die Oberflächenqualität visuell begutachtet und in die Klassen 1 (schlecht, d.h. markante Schleifspuren feststellbar) bis 5 (gut, d.h. im wesentlichen mit bloßem Auge keine Schleifspuren erkennbar).

### Komponente Al

Polyamid 6, erhalten aus ε-Caprolactam, mit einer Viskositätszahl von 150 ml/g.

### Komponente B1I

Pfropfkautschuk mit 62 Gew.-% Polybutadien als Pfropfgrundlage und 38 Gew.-% einer Pfropfauflage aus 75 Gew.-% Styrol und 25 Gew.-% Acrylnitril. Mittlere Teilchengröße ca. 400 nm.

### Komponente B1II

Pfropfkautschuk mit 75 Gew.-% Polybutadien als Pfropfgrundlage und 25 Gew.-% einer Pfropfauflage aus 75 Gew.-% Styrol und 25 Gew.-% Acrylnitril. Mittlere Teilchengröße ca. 270 nm.

### Komponente B1III

Pfropfkautschuk mit 70 Gew.-% Polybutadien als Pfropfgrundlage und 30 Gew.-% einer Pfropfauflage aus 75 Gew.-% Styrol und 25 Gew.-% Acrylnitril. Mittlere Teilchengröße ca. 370 nm.

### Komponente B2I

Styrol-Acrylnitril-Copolymer mit 75 Gew.% Styrol und 25 Gew.% Acrylnitril und einer Viskositätszahl von 80 ml/g (bestimmt in 0,5 Gew.-%-iger DMF-Lösung bei 25°C).

### Komponente Cl

Styrol-Acrylnitril-Maleinsäureanhydrid-Terpolymer welches eine Zusammensetzung von 74/23,5/2,5 (Gew.-%) und eine Viskositätszahl von 80 ml/g hatte.

### Komponente CII

Styrol-Acrylnitril-Maleinsäureanhydrid-Terpolymer welches eine Zusammensetzung von 75/24/1 (Gew.-%) und eine Viskositätszahl von 80 ml/g hatte.

### Komponente EI

Phthalsäureanhydrid

### Komponente FI

Schnittglasfaser mit Polyurethanschlichte, Faserdurchmesser 10 µm.

### Komponente FII

Talk mit einem Aspektverhältnis von 5 : 1

### Komponente FIII

(Bis-(2,2,6,6-tetramethyl-4-piperidyl))sebacat (Tinuvin^{®}770).

### Komponente FIV

Calziumstearat (z.B. Ceasit® der Firma Bärlocher).

### Herstellung Komponenten DI bis DIV

Die in Tabelle 1 angegebenen Komponenten wurden in den unten angegebenen Gewichtsverhältnissen in Form ihrer Granulate gemischt und anschließend in einem Zweiwellenextruder bei einer Massetemperatur von 240 bis 260°C umgesetzt. Die Schmelze wurde durch ein Wasserbad geleitet und granuliert.

**Tabelle 1**

| Zusammensetzung [Gew.-%] | | | | |
|---|---|---|---|---|
| | DI | DII | DIII | DIV |
| Komponente CI | 12,5 | 15 | 17,5 | - |
| Componente CII | - | - | - | 30 |
| Componente AI | 87,5 | 85 | 82,5 | 70 |

| Eigenschaften: | | | | |
|---|---|---|---|---|
| MVI [240°C/5 kg] | 12,7 | 7,5 | 4,2 | 16,3 |
| VZ* | 197 | 209 | n.b.**) | n.b.**) |

| | | | | |
|---|---|---|---|---|
| *) Viskositätszahl, bestimmt wie oben für Polyamid beschrieben. **) enthält unlösliche Anteile, daher nicht bestimmt | | | | |

### Herstellung Formmassen V1 bis 10

Die Komponenten wurden in einem Zweiwellenextruder bei einer Massetemperatur von 240 bis 260°C gemischt. Die Schmelze wurde durch ein Wasserbad geleitet und granuliert.

Die Ergebnisse der Prüfungen sind in Tabelle 2 aufgeführt.

**Tabelle 2:**

| Komponenten | Formmasse Zusammensetzung [Gew.-%] | | | | | | | | | |
|---|---|---|---|---|---|---|---|---|---|---|
| | V1 * | V2 | 3 | 4 | 5 | 6 | V7 | V8 | 9 | 10 |
| AI | 41 | 41 | 11,6 | 17,2 | 21,2 | 31,2 | 41 | 33,1 | 14,4 | 17,2 |
| B1I | 35,3 | 35,3 | 35,3 | 35,3 | 35,3 | 35,3 | 35,3 | 28,1 | 28,1 | 20,1 |
| B1II | - | - | - | - | - | - | - | - | - | 12 |
| B2I | 19,5 | 19,5 | 19,5 | 19,5 | 19,5 | 19,5 | 19,4 | 15,5 | 15,5 | 22,7 |
| CI | 4,2 | - | - | - | - | - | - | 3,3 | - | - |
| CII | - | 4,2 | - | - | - | - | 4,2 | - | - | - |
| DI | - | - | 33,6 | - | - | - | - | - | - | - |
| DII | - | - | - | 28 | - | - | - | - | 22,0 | 28 |
| DIII | - | - | - | - | 24 | - | - | - | - | - |
| DIV | - | - | - | - | - | 14 | - | - | - | - |
| FI | - | - | - | - | - | - | - | 20 | 20 | - |
| FII | - | - | - | - | - | - | 0,1 | - | - | - |

| Eigenschaften | | | | | | | | | | |
|---|---|---|---|---|---|---|---|---|---|---|
| Vicat B [°C] | 106 | 105 | 108 | 108 | 108 | 108 | 109 | 117 | 119 | 107 |
| MVI [ml/10'] | 5,2 | 6,1 | 4,0 | 4,5 | 4,6 | 5,9 | 7,3 | 3,0 | 2,8 | 3,9 |
| ak, RT [kJ/m²] | 43 | 57 | 62 | 64 | 62 | 61 | 25 | 7 | 11 | 67 |
| ak,-30°C [kJ/m²] | 15 | 17 | 17 | 15 | 19 | 17 | 14 | 5 | 7 | 19 |
| Ws,-30°C [Nm] | 26 | 54 | 87 | 78 | 61 | 56 | 34 | n.b. | n.b. | 76 |
| E-Modul [MPa] | 1945 | 1930 | 2056 | 2029 | 2041 | 2050 | 2021 | 4620 | 4890 | 2050 |

| | | | | | | | | | | |
|---|---|---|---|---|---|---|---|---|---|---|
| *V: zum Vergleich | | | | | | | | | | |

Die Formmassen, die nach dem erfindungsgemäßen Verfahren hergestellt wurden, wiesen verbesserte Steifigkeit und z. T. höhere Zähigkeit auf. Die Produkte wiesen auch erhöhte Vicat B-Wärmeformbeständigkeit auf.

### Herstellung der Formmassen V11 bis 16

**Tabelle 3**

| Komponenten | Formmasse Zusammensetzung [Gew.-%] | | | | | | | |
|---|---|---|---|---|---|---|---|---|
| | V11 | V12 | V13 | V14 | V15 | V16 | 17 | 18 |
| AI | 41 | 41 | 41 | 41 | 41 | 41 | 20,7 | 20,4 |
| B1I | 34,8 | 34,8 | 34,8 | 34,8 | 34,8 | 26 | 34,3 | 34,1 |
| B1III | - | - | - | - | - | 8,8 | - | - |
| CI | 5 | 5 | 5 | 5 | 5 | 5 | - | - |
| DIII | - | - | - | - | - | - | 24 | 24 |
| B2I | 18 | 17,7 | 17,5 | 17 | 16,5 | 17 | 19,5 | 19,5 |
| E1 | 0,2 | 0,2 | 0,2 | 0,2 | 0,2 | 0,2 | - | - |
| FIII | 1 | 1 | 1 | 1 | 1 | 1 | 1 | 1 |
| FIV | - | 0,1 | 0,5 | 1 | 1,5 | 1 | 0,5 | 1 |

| Eigenschaften | | | | | | | | |
|---|---|---|---|---|---|---|---|---|
| MVI [ml/10'] | 3,9 | 4,7 | 4,9 | 6,3 | 8,3 | 7,9 | 4,6 | 5,1 |
| ak, RT [kJ/m²] | 59 | 58,6 | 59,7 | 57,3 | 26,7 | 61,9 | 61,4 | 60,4 |

| Oberflächen-Qualität | | | | | | | | |
|---|---|---|---|---|---|---|---|---|
| Platte 1 | 1 | 3 | 4 | 3,5 | 2,5 | 4 | 3 | 2,5 |
| Platte 2 | 3 | 3,5 | 4,5 | 4,5 | 3,5 | 4,5 | 3 | 3 |

| Kratzfestigkeit | | | | | | | | |
|---|---|---|---|---|---|---|---|---|
| Platte 1 | 1 | 1,5 | 1,5 | 2 | 1,5 | 2 | 1,5 | 1,5 |
| Platte 2 | 1,5 | 1,5 | 1,5 | 1,5 | 1 | 1,5 | 1,5 | 1 |

## Patentansprüche

1. Verfahren zur Herstellung von Formmassen, enthaltend
A) ein thermoplastisches Polyamid,
B) eine Zusammensetzung enthaltend
b1) ein Pfropfcopolymer, enthaltend einen Kautschuk als Pfropfgrundlage und eine Pfropfauflage auf der Basis eines ungesättigten Monomeren und
b2) ein Matrixpolymer sowie
C) ein kautschukfreies Copolymer enthaltend,
c1) mindestens 30 Gew.-% Einheiten, die sich von einem vinylaromatischen Monomeren ableiten, bezogen auf das Gesamtgewicht aller Einheiten, die C) enthält,
c2) Einheiten, die sich von einem Monomeren ableiten, das eine funktionelle Gruppe enthält, die mit den Endgruppen des Polyamides A) reagieren kann und
c3) Einheiten, die sich von einem Monomeren ableiten, das keine funktionellen Gruppen enthält, die mit den Endgruppen des Polyamides A) reagieren,
durch Mischen der Komponenten, **dadurch gekennzeichnet, dass** man in einem ersten Schritt ein Pfropfcopolymer (D), enthaltend die Gesamtmenge der Komponente C) und eine Teilmenge der Komponente A), herstellt und in einem zweiten Schritt das Pfropfcopolymer D) mit den anderen Komponenten und der Restmenge der Komponente A) mischt.

2. Verfahren nach Anspruch 1, **dadurch gekennzeichnet, dass** das Pfropfcopolymer (D) von 5 bis 95 Gew.-% Komponente C) und 5 bis 95 Gew.-% Komponente A) enthält.

3. Verfahren nach Anspruch 1 oder 2, **dadurch gekennzeichnet, dass** für die Herstellung des Pfropfcopolymeren D) das molare Verhältnis der funktionellen Gruppen der Komponente C) zu den Aminoendgruppen des Polyamids A) von 0,8 : 1 bis 1,3 : 1 beträgt.

4. Verfahren nach den Ansprüchen 1 bis 3, **dadurch gekennzeichnet, dass** das Copolymer C) ein Terpolymer aus Styrol, Maleinsäureanhydrid und Acrylnitril ist.

5. Verfahren nach den Ansprüchen 1 bis 4, **dadurch gekennzeichnet, dass** die Komponente B) ein ABS ist.

6. Verfahren nach den Ansprüchen 1 bis 5, **dadurch gekennzeichnet, dass** die Formmassen von 0,3 bis 1,5 Gew.-%, bezogen auf das Gesamtgewicht der Formmasse, eines Stearates oder eines Silikonöls oder einer Mischung davon enthalten.

7. Formmassen erhältlich durch Mischen
A) eines thermoplastischen Polyamides,
B) einer Zusammensetzung enthaltend
b1) ein Pfropfcopolymer, enthaltend einen Kautschuk als Pfropfgrundlage und eine Pfropfauflage auf der Basis eines ungesättigten Monomeren und
b2) ein Matrixpolymer mit
einem Pfropfcopolymeren (D), enthaltend
C) ein kautschukfreies Copolymer, enthaltend,
c1) mindestens 30 Gew.-% Einheiten, die sich von einem vinylaromatischen Monomeren ableiten, bezogen auf das Gesamtgewicht aller Einheiten, die C) enthält,
c2) Einheiten, die sich von einem Monomeren ableiten, das eine funktionelle Gruppe enthält, die mit den Endgruppen des Polyamides A) reagieren kann und
c3) Einheiten, die sich von einem Monomeren ableiten, das keine funktionellen Gruppen enthält, die mit den Endgruppen des Polyamides A) reagieren,
und eine Teilmenge des Polyamides A).

8. Formmassen nach Anspruch 7, enthaltend von 0,3 bis 1,5 Gew.-%, bezogen auf das Gesamtgewicht der Formmasse, eines Stearates oder eines Silikonöls oder einer Mischung davon.

9. Verwendung der Formmassen gemäß Ansprüche 7 bis 8 zur Herstellung von Formteilen, Folien, Fasern oder Schäumen.

10. Formteile, Folien, Fasern oder Schäume, erhältlich aus Formmassen gemäß Ansprüche 7 bis 8.

## Claims

1. A process for preparing molding compositions comprising
A) a thermoplastic polyamide,
B) a composition comprising
b1) a graft copolymer, comprising a rubber as graft base and a graft based on an unsaturated monomer, and
b2) a matrix polymer, and also
C) a rubber-free copolymer, comprising
c1) at least 30% by weight, based on the total weight of all of the units present in C), of units which derive from a vinylaromatic monomer,
c2) units which derive from a monomer which comprises a functional group which can react with the end groups of the polyamide A), and
c3) units which derive from a monomer which comprises no functional groups which react with the end groups of the polyamide A),
by mixing the components, which comprises, in a first step, preparing a graft copolymer (D), comprising the entire amount of component C) and a portion of component A), and, in a second step, mixing the graft copolymer D) with the other components and with the remainder of component A).

2. The process according to claim 1 wherein the graft copolymer (D) comprises from 5 to 95% by weight of component C) and from 5 to 95% by weight of component A).

3. The process according to claim 1 or 2 wherein for the preparation of the graft copolymer D) the molar ratio of the functional groups of component C) to the amino end groups of the polyamide A) is from 0.8 : 1 to 1.3 : 1.

4. The process according to any of claims 1 to 3 wherein the copolymer C) is a terpolymer of styrene, maleic anhydride, and acrylonitrile.

5. The process according to any of claims 1 to 4 wherein component B) is an ABS.

6. The process according to any of claims 1 to 5 wherein the molding compositions comprise from 0.3 to 1.5% by weight, based on the total weight of the molding composition, of a stearate or a silicone oil, or of a mixture thereof.

7. A molding composition obtainable by mixing
A) a thermoplastic polyamide,
B) a composition comprising
b2) a graft copolymer, comprising a rubber as graft base and a graft based on an unsaturated monomer, and
b2) a matrix polymer
with
a graft copolymer (D), comprising
C) a rubber-free copolymer, comprising
c2) at least 30% by weight, based on the total weight of all of the units present in C), of units which derive from a vinylaromatic monomer,
c2) units which derive from a monomer which comprises a functional group which can react with the end groups of the polyamide A), and
c3) units which derive from a monomer which comprises no functional groups which react with the end groups of the polyamide A),
and a portion of the polyamide A).

8. The molding composition according to claim 7, comprising from 0.3 to 1.5% by weight, based on the total weight of the molding composition, of a stearate or of a silicone oil, or of a mixture thereof.

9. The use of the molding composition according to claim 7 or 8 for producing moldings, films, fibers, or foams.

10. A molding, a film, a fiber, or a foam obtainable from a molding composition according to claim 7 or 8.

## Revendications

1. Procédé pour la production de matières à mouler, contenant
A) un polyamide thermoplastique,
B) une composition contenant
b1) un copolymère greffé, contenant un caoutchouc en tant que base de greffage et un greffon à base d'un monomère insaturé et
b2) un polymère matrice ainsi que
C) un copolymère exempt de caoutchouc, contenant
c1) au moins 30 % en poids de motifs qui dérivent d'un monomère vinylaromatique, par rapport au poids total de tous les motifs que C) contient,
c2) des motifs qui dérivent d'un monomère qui contient un groupe fonctionnel pouvant réagir avec les groupes terminaux du polyamide A) et
c3) des motifs qui dérivent d'un monomère qui ne contient pas de groupes fonctionnels réagissant avec les groupes terminaux du polyamide A),
par mélange des composants, **caractérisé en ce que** dans une première étape on prépare un copolymère greffé (D), contenant la quantité totale du composant C) et une quantité partielle du composant A), et dans une deuxième étape on mélange le copolymère greffé D) ave les autres composants et la quantité restante du composant A).

2. Procédé selon la revendication 1, **caractérisé en ce que** le copolymère greffé (D) contient de 5 à 95 % en poids de composant C) et de 5 à 95 % en poids de composant A).

3. Procédé selon la revendication 1 ou 2, **caractérisé en ce que** pour la préparation du copolymère greffé D) le rapport molaire des groupes fonctionnels du composant C) aux groupes terminaux amino du polyamide A) vaut de 0,8:1 à 1,3:1.

4. Procédé selon les revendications 1 à 3, **caractérisé en ce que** le copolymère C) est un terpolymère de styrène, anhydride maléique et acrylonitrile.

5. Procédé selon les revendications 1 à 4, **caractérisé en ce que** le composant B) est un ABS.

6. Procédé selon les revendications 1 à 5, **caractérisé en ce que** les matières à mouler contiennent de 0,3 à 1,5 % en poids, par rapport au poids total de la matière à mouler, d'un stéarate ou d'une huile de silicone ou d'un mélange de ceux-ci.

7. Matières à mouler pouvant être obtenues par mélange
A) d'un polyamide thermoplastique,
B) d'une composition contenant
b1) un copolymère greffé, contenant un caoutchouc en tant que base de greffage et un greffon à base d'un monomère insaturé et
b2) un polymère matrice
avec
un copolymère greffé (D), contenant
C) un copolymère exempt de caoutchouc, contenant
c1) au moins 30 % en poids de motifs qui dérivent d'un monomère vinylaromatique, par rapport au poids total de tous les motifs que C) contient,
c2) des motifs qui dérivent d'un monomère qui contient un groupe fonctionnel pouvant réagir avec les groupes terminaux du polyamide A) et
c3) des motifs qui dérivent d'un monomère qui ne contient pas de groupes fonctionnels réagissant avec les groupes terminaux du polyamide A),
et une quantité partielle du polyamide A).

8. Matières à mouler selon la revendication 7, contenant de 0,3 à 1,5 % en poids, par rapport au poids total de la matière à mouler, d'un stéarate ou d'une huile de silicone ou d'un mélange de ceux-ci.

9. Utilisation des matières à mouler selon les revendications 7 et 8 pour la production de pièces moulées, de films, de fibres ou de mousses.

10. Pièces moulées, films, fibres ou mousses, pouvant être obtenus à partir de matières à mouler selon les revendications 7 et 8.
